# EUROPÄISCHE PATENTSCHRIFT

(11) **EP 0 426 065 B1**
(45) Veröffentlichungstag und Bekanntmachung des Hinweises auf die Patenterteilung: **21.09.1994**
(21) Anmeldenummer: 90120693.8
(22) Anmeldetag: 29.10.1990
(51) Int. Cl.: B29C 53/04, B29C 53/06

(54) **Biegemaschine**
Bending machine
Machine à plier

(30) Priorität: 01.11.1989 DE 3936310
(43) Veröffentlichungstag der Anmeldung: 08.05.1991
(73) Patentinhaber: Wegener GmbH, D-52015 Aachen (DE)
(72) Erfinder: Weissfloch, Reinhard, Dr.-Ing., W-5100 Aachen (DE)
(74) Vertreter: Paul, Dieter-Alfred, Dipl.-Ing.

(56) Entgegenhaltungen:
- DE-A- 3 637 436

## Beschreibung

Die Erfindung betrifft eine Biegemaschine zum mehrfachen aufeinanderfolgenden Umbiegen von insbesondere plattenförmigen Werkstücken,
a) mit einer Biegeeinrichtung zum Umbiegen eines in die Biegeeinrichtung hineintransportierten Teils des Werkstückes um eine vorgesehene Biegelinie,
b) mit einer Transporteinrichtung zum Einschieben bzw. Nachschieben des Werkstückes in die Biegeeinrichtung vor dem ersten Biegevorgang bzw. zwischen zwei Biegevorgängen um einen Transportweg, der dem Abstand zwischen Vorderkante des Werkstückes und der ersten Biegelinie bzw. zwischen zwei Biegelinien entspricht.

Rohrförmige Gegenstände mit eckigem Querschnitt werden häufig dadurch hergestellt, daß eine zunächst ebene Platte mehrfach in derselben Richtung umgebogen ist, bis ihre Stirnkanten aneinanderstoßen. Dort werden die Stirnkanten dann miteinander verschweißt. Das Umbiegen geschieht zur Ausbildung von Eckkanten an sogenannten Biegelinien. Als Material kommen alle biegsamen Werkstoffe in Frage, also Metalle, aber auch Kunststoffe. Soweit erforderlich, werden die Biegelinien vor dem Biegevorgang so weit erhitzt, daß das Material plastisch und erst dann biegsam wird.

Für das Verarbeiten von thermoplastischem Kunststoff sind aus der DE-A-36 37 436 Biegemaschinen bekannt, die eine Klemmeinrichtung aufweisen, der - in Transportrichtung des Werkstückes gesehen - eine schwenkbar aufgehängte, leistenförmige Biegewange nachgelagert ist. Auf der der Biegewange abgewandten Seite der Klemmeinrichtung ist eine Heizeinrichtung und eine Halteeinrichtung angeordnet. Die Heizeinrichtung besteht aus zwei übereinander verlaufenden, vertikal verfahrbaren Heizschwertern. Die Heizeinrichtung ist auf der Klemmeinrichtung angeordnet und mit dieser in und gegen die Transportrichtung verfahrbar.

Für einen Biegevorgang werden sowohl die Halteeinrichtung als auch die Klemmeinrichtung geöffnet, so daß eine Platte aus thermoplastischem Kunststoff unter die Klemmleisten der Halte- und der Klemmeinrichtung bis zur hochgestellten Biegewange geschoben werden kann. In eine Steuereinrichtung wird nun der Abstand eingegeben, in dem die Biegelinie zur an der Biegewange anliegenden freien Kante zu liegen kommen soll. Die Klemmeinrichtung wird dann entsprechend diesem Abstand von der Biegewange weg nach hinten verfahren, bis die auf ihr angeordnete Heizeinrichtung in der Ebene der vorgesehenen Biegelinie zu liegen kommt. Bei dieser Transportbewegung ist die Kunststoffplatte durch die Halteeinrichtung festgeklemmt. Nach Erreichen dieser Position wird die Klemmeinrichtung wieder geschlossen und werden die Heizschwerter zur Anlage an die Kunststoffplatte gebracht. Sie erhitzen den Kunststoff im Bereich der vorgesehenen Biegelinie so stark, daß sie plastifiziert und biegsam wird.

Nach Ausbilden der Biegelinie wird die Halteeinrichtung gelöst und die Klemmeinrichtung wieder in Richtung auf die Biegewange verfahren. Dabei fungiert sie als Transporteinrichtung, denn sie nimmt die Kunststoffplatte mit, und zwar so weit, bis die erhitzte Biegelinie etwa oberhalb der Hinterkante der Biegewange zu liegen kommt. Dann wird der Elektromotor zur Verschwenkung der Biegewange in der Weise angesteuert, daß sie hochgeschwenkt wird. Hierdurch wird der auf der Biegewange aufgeschobene Teil der Kunststoffplatte entsprechend hochgebogen.

Ein zweiter Biegevorgang kann sich in entsprechender Weise anschließen, d. h. zunächst wird die Klemmeinrichtung wieder geöffnet und in Richtung auf die noch in der hinteren Stellung befindliche Halteeinrichtung bewegt, und zwar um einen Betrag, der dem Abstand zwischen der gerade umgebogenen Biegelinie und der neu vorgesehenen Biegelinie entspricht. Der weitere Ablauf ist dann wie schon oben beschrieben.

Beim Umbiegen von sehr dünnwandigen Werkstücken und bei Werkstücken, deren Biegelinien durch Hitzeeinwirkung plastifiziert werden müssen, besteht die Gefahr, daß sich der umgebogene Teil des Werkstückes unter Schwerkrafteinwirkung von der Biegewange abhebt und selbsttätig weiter umbiegt als gewünscht. Diese Gefahr besteht insbesondere dann, wenn sich der Schwerpunkt des umgebogenen Teils des Werkstückes von der Biegewange weg zur Mitte des Maschinenrahmens hin bewegt. Die noch plastifizierte und deshalb nicht ausgehärtete Biegelinie kann dem Gewicht des schon umgebogenen Teils des Werkstückes kaum Widerstand entgegensetzen. Dieser Teil fällt in die Maschine hinein, was zur Folge hat, daß das Werkstück unbrauchbar wird.

Der Erfindung liegt die Aufgabe zugrunde, eine Biegemaschine der eingangs genannten Art so auszubilden, daß ein ungewolltes Einfallen des schon umgebogenen Teils des Werkstückes vermieden wird.

Diese Aufgabe wird erfindungsgemäß durch eine Biegemaschine mit folgenden Merkmalen gelöst:
c) der Biegeeinrichtung ist eine Stützeinrichtung zur Abstützung des umgebogenen Teils des Werkstückes zugeordnet;
d) die Stützeinrichtung weist ein quer zur Transportebene des Werkstückes verfahrbares Stützelement auf;
e) für das Verfahren des Stützelements ist ein Verfahrantrieb vorgesehen;
f) der Transporteinrichtung ist ein Wegaufnehmer zur wenigstens teilweisen Erfassung des vom Werkstück beim Transportvorgang in die Biegeeinrichtung zurückgelegten Weges zugeordnet;
g) zwischen Verfahrantrieb und Wegaufnehmer ist eine Übertragungseinrichtung mit einer Steuereinrichtung zur Übertragung des vom Wegaufnehmer erfaßten Weges auf den Verfahrantrieb in der Weise vorgesehen, daß das Stützelement nach wenigstens dem zweiten Transportvorgang des Werkstückes eine Stützstellung
   für den umgebogenen Teil des Werkstückes einnimmt.

Erfindungsgemäß weist die Biegemaschine zusätzlich eine Stützeinrichtung auf, die den umgebogenen Teil des Werkstückes daran hindert, daß er beim Biegevorgang auf Grund Schwerpunktverschiebung in die Maschine zurückfällt. Die Stützeinrichtung legt sich dabei an den umgebogenen Teil des Werkstückes an, wobei sie entsprechend der jeweiligen Höhenlage des umgebogenen Teils des Werkstückes für jeden Biegevorgang nachgeführt wird. Dies geschieht durch eine Erfassung des Weges, den die Transporteinrichtung beim Vorschieben des Werkstückes zwischen zwei Biegevorgängen zurücklegt. Dieser Weg entspricht nämlich dem Abstand zwischen zwei Biegelinien und legt damit auch fest, welche Höhenlage der umgebogene Teil des Werkstückes nach dem Umbiegen einnimmt. Entsprechend wird der Verfahrantrieb für das Stützelement angesteuert und bringt es in die jeweilige Stützstellung, d. h. in eine Stellung, in der der umgebogene Teil des Werkstückes an einem Einfallen in die Biegemaschine gehindert wird.

In Ausbildung der Erfindung ist vorgesehen, daß der Wegaufnehmer ein elektrischer Wegsensor und der Verfahrantrieb ein Elektromotor sind und das die Übertragungseinrichtung eine elektrische oder elektronische Steuerschaltung zur Umsetzung der vom Wegsensor abgegebenen Signale in eine entsprechende Verfahrbewegung des Stützelements aufweist. Dabei können verschiedene Arten von Wegsensoren zum Einsatz kommen, und zwar auch solche, die lediglich die Stellung der Transporteinrichtung vor Beginn einer Transportbewegung aufnimmt und daraus den Transportweg errechnet. Die elektrische oder elektronische Steuerschaltung kann so ausgebildet werden, das bei ihr auch Besonderheiten berücksichtigt werden können, insbesondere wenn nicht im rechten Winkel, sondern mit kleineren Winkeln gebogen wird, um beispielsweise ein sechseckiges Rohr herzustellen. Ein zur Steuereinrichtung gehörender Rechner kann dann die erforderliche Höhenlage für das Stützelement ausrechnen.

In weiterer Ausgestaltung der Erfindung ist vorgesehen, daß die Steuerschaltung so ausgebildet ist, daß das Stützelement zwischen zwei Biegevorgängen in seine der Transportebene benachbarten Endstellung verfahrbar ist und dann aus dieser Endstellung um einen Weg bewegbar ist, der dem jeweiligen Transportweg des Werkstückes, vermindert um den Abstand des Stützelements zwischen der vorerwähnten Endstellung und der Transportebene, entspricht. Die Stützstellung wird also bei dieser Steuerschaltung nach jedem Biegevorgang von einer unteren Endstellung angefahren, und zwar entsprechend dem jeweiligen Transportweg des Werkstückes, vermindert um den im Regelfall notwendigen Abstand zwischen der vorerwähnten Endstellung und der Transportebene.

Alternativ dazu kann vorgesehen sein, daß die Steuerschaltung Speicherelemente zur Speicherung der Transportwege zweier aufeinanderfolgender Transportvorgänge des Werkstückes hat und daß die Steuerschaltung eine Differenzbildung zwischen den beiden Transportwegen vornimmt und den Elektromotor nur jeweils zur Ausführung des Differenzweges ansteuert. Auf diese Weise werden Verfahrwege eingespart.

Der Grundgedanke der Erfindung kann auch mit hydraulischen oder pneumatischen Mitteln verwirklicht werden. Hierzu ist vorgesehen, daß der Wegaufnehmer als ein erster und die Verfahreinrichtung als ein zweiter Druckzylinder ausgebildet sind und die Druckräume beider Druckzylinder über eine Steuerventileinheit aufweisende Fluidleitungen miteinander verbunden sind, wobei der erste Druckzylinder mit der Transporteinrichtung derart gekoppelt ist, daß jeweils mit einem Transportvorgang ein für das Verfahren des Stützelements in die Stützstellung ausreichendes Volumen verdrängbar ist, und wobei die Steuerventileinheit zwischen zwei Biegevorgängen derart ansteuerbar ist, daß das Stützelement in seine der Transportebene benachbarte Endstellung bewegbar ist. Nach dieser Ausführungsform wird der Transportweg der Transporteinrichtung auf einen ersten Druckzylinder übertragen, dessen Volumenverdrängung dann über das Fluid an den zweiten Druckzylinder zur Bewegung des Stützelements weitergegeben wird und dort zu einer entsprechenden Verfahrbewegung führt.

In weiterer Ausgestaltung ist vorgesehen, daß der erste Druckzylinder zwischen zwei Anschlägen um einen Totweg verschieblich gelagert ist, der im wesentlichen dem Abstand des Stützelements zur Transportebene in der zu dieser benachbarten Endstellung entspricht. Auf diese Weise findet eine Volumenverdrängung im ersten Druckzylinder erst nach Zurücklegen des Totweges statt, so daß der zweite Druckzylinder nur einen um den Totweg verminderten Weg zurücklegt. Damit wird kompensiert, daß die untere Endstellung des Stützelements im Regelfall aus konstruktiven Gründen einen Abstand zur Transportebene hat.

Alternativ dazu kann vorgesehen sein, daß die Steuerventileinheit ein Belüftungsventil zur Belüftung der Fluidleitung bei der Wegaufnahme im ersten Druckzylinder aufweist, wobei das Belüftungsventil solange in Belüftungsstellung haltbar ist, daß der vom ersten Druckzylinder aufgenommene Weg auf den zweiten Druckzylinder nur um einen solchen Anteil vermindert übertragen wird, der dem Abstand des Stützelements zur Transportebene in der zu dieser benachbarten Endstellung entspricht. Die Korrektur geschieht also in diesem Fall nicht über einen Totweg des ersten Druckzylinders, sondern über dessen Belüftung für einen bestimmten Zeitraum. Dies kann elektrisch oder elektronisch gesteuert werden, wobei diese Steuerung auch dafür herangezogen werden kann, den Weg des Stützelements anzupassen, wenn nicht um 90̸°, sondern um kleinere Winkelgrade gebogen wird.

Nach der Erfindung ist ferner vorgesehen, daß die Steuerventileinheit ein erstes und ein zweites Steuerventil aufweisen, wobei das erste Steuerventil in der Fluidleitung liegt und zwischen einer Offenstellung und einer Sperrstellung schaltbar ist und das zweite Steuerventil in einem Abzweig der Fluidleitung zwischen erstem Steuerventil und erstem Druckzylinder angeordnet und zwischen einer Belüftungsstellung und einer Sperrstellung schaltbar ist, und daß die beiden Steuerventile von der Steuereinrichtung derart ansteuerbar sind, daß bei einer Transportbewegung der Transporteinrichtung das erste Steuerventil in Offenstellung und das zweite Steuerventil in Sperrstellung ist, und daß nach Beendigung der Transportbewegung das erste Steuerventil in Sperrstellung und das zweite Steuerventil in Belüftungsstellung ist und daß vor Beginn einer weiteren Transportbewegung das erste Steuerventil so lange in Offenstellung unter Beibehaltung der Belüftungsstellung des zweiten Steuerventils ist, bis das Stützelement seine Endstellung benachbart der Transportebene einnimmt. Diese Ventilanordnung und zugehörige Steuerung zeichnet sich durch besondere Einfachheit und Funktionssicherheit aus.

Zusätzlich kann die Fluidleitung noch über ein drittes Steuerventil mit einer Druckluftquelle verbindbar sein, deren Druck gerade so groß ist, daß bei Beaufschlagung der Fluidleitung mit diesem Druck der zweite Druckzylinder noch keine Verfahrbewegung ausführt und daß das dritte Steuerventil für kurze Zeit in Offenstellung bringbar ist, wenn das erste Steuerventil in Offenstellung und das zweite Steuerventil in Sperrstellung ist. Auf diese Weise erhält die Fluidleitung eine Druckvorspannung, die die ansonsten gegebene Kompression der Druckluft zu Beginn jeden Transportvorgangs kompensiert und deshalb eine exakte Nachführung des Stützelements in Anpassung an die Bewegung im ersten Druckzylinder bewirkt.

Die vorerwähnte Aufgabe kann alternativ auch durch eine Biegemaschine der eingangs genannten Art mit folgenden Merkmalen gelöst werden:
c) der Biegeeinrichtung ist eine Stützeinrichtung zur Abstützung des umgebogenen Teils des Werkstückes zugeordnet;
d) die Stützeinrichtung weist ein quer zur Transportebene des Werkstückes verfahrbares Stützelement auf;
e) für das Verfahren des Stützelementes ist ein Verfahrantrieb vorgesehen;
f) es ist eine Steuereinrichtung vorgesehen, die die Verfahreinrichtung derart ansteuert, daß die Stützeinrichtung aus einer Ruhestellung erstmals mit Abschluß eines zweiten Biegevorgangs in eine Stützstellung vorgefahren wird und daß die Stützeinrichtung für jeden weiteren Biegevorgang zunächst aus der Stützstellung wieder zurückgefahren und mit Abschluß des jeweiligen Biegevorgangs wieder in die Stützstellung vorgefahren wird.

Auch hier ist zur Vermeidung des ungewollten Einfallens des schon umgebogenen Teils des Werkstückes eine Stützeinrichtung vorgesehen. Eine Steuereinrichtung sorgt dafor, daß deren Verfahreinrichtung so gesteuert wird, daß die Stützeinrichtung mit Abschluß des zweiten Biegevorgangs erstmals in eine Stützstellung vorgefahren wird, und zwar soweit, bis die Stützeinrichtung zur Anlage an dem Werkstück kommt. Mit der Anlage an den Werkstück schaltet sich der Verfahrantrieb entweder selbsttätig ab oder er bleibt aktiviert, wobei er jedoch in diesem Fall in Abhängigkeit von der Materialstärke derart einstellbar ist, daß er in der Stützstellung durch Anlage am Werkstück angehalten wird. Bei einem hydraulischen oder pneumatischen Verfahrantrieb kann dies durch entsprechende Einstellung des Arbeitsdruckes oder durch Überdruckventile bewirkt werden. Für jeden weiteren Biegevorgang wiederholt sich dieser Zyklus, indem die Stützeinrichtung zunächst wieder zurückgefahren wird und mit Abschluß des jeweiligen Biegevorgangs wieder bis zur Anlage an dem Werkstück in die Stützstellung vorgefahren wird.

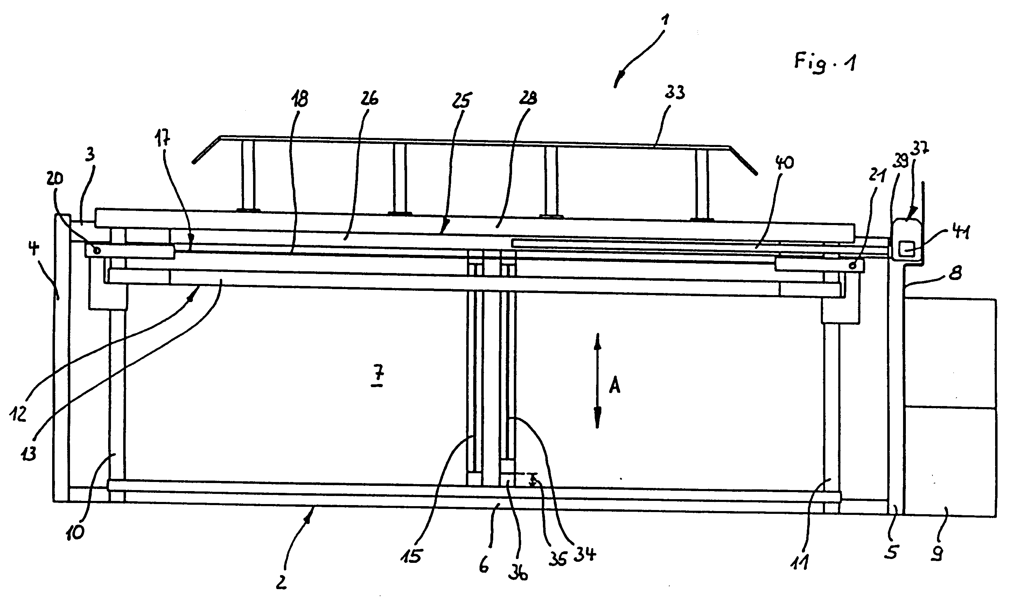

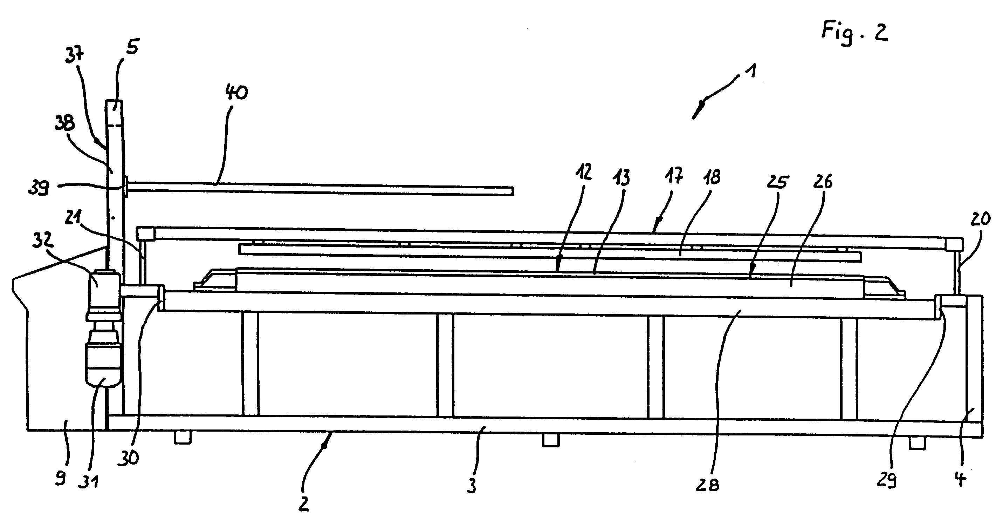

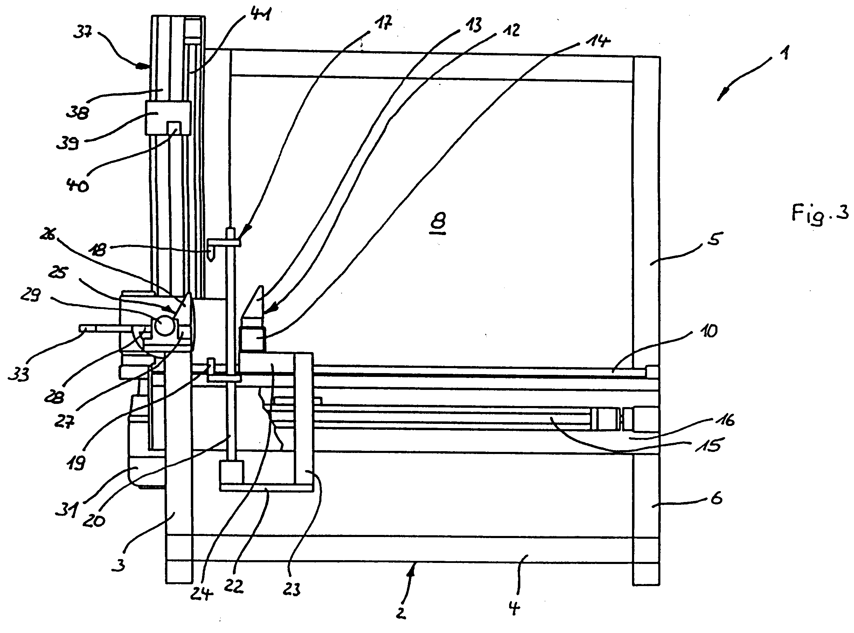

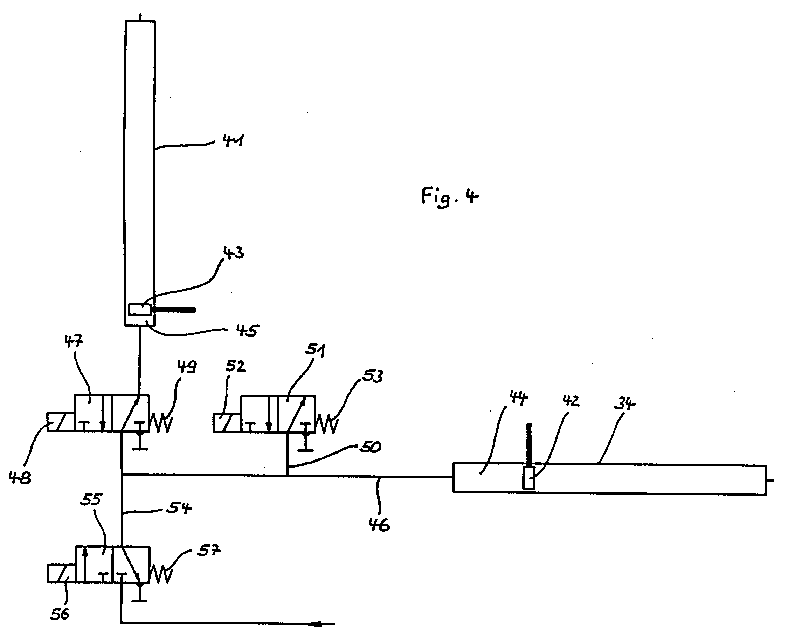

In der Zeichnung ist die Erfindung an Hand eines Ausführungsbeispiels näher veranschaulicht. Es zeigen:
- Figur (1): eine Draufsicht auf die Biegemaschine;
- Figur (2): eine Frontansicht der Biegemaschine gemäß Figur (1) von der Biegewange her gesehen;
- Figur (3): eine Seitenansicht der Biegemaschine gemäß den Figuren (1) und (2) mit Teilschnittdarstellungen und
- Figur (4): eine Darstellung der pneumatischen Schaltung für die Stützeinrichtung.

Die in den Figuren (1) bis (3) dargestellte Biegemaschine (1) weist einen Haschinenrahmen (2) auf, der im wesentlichen gebildet wird von einem vorderen Rahmenabschnitt (3), zwei seitlichen Rahmenabschnitten (4, 5) und einem rückwärtigen Rahmenabschnitt (6). Die Rahmenabschnitte (3, 4, 5, 6) schließen ein innenseitig im wesentlichen freies Rechteck (7) ein.

Wie insbesondere aus den Figuren (2) und (3) zu ersehen ist, ist der seitliche Rahmenabschnitt (5) hochgezogen und dient dabei als Rahmen für eine Acrylglasscheibe (8). Außenseitig an diesen seitlichen Rahmenabschnitt (5) angesetzt ist ein Bedienungspult (9).

Jeweils benachbart der seitlichen Rahmenabschnitte (4, 5) und parallel dazu verlaufen Führungsstangen (10̸, 11), die sich zwischem dem vorderen Rahmenabschnitt (3) und dem rückwärtigen Rahmenabschnitt (6) erstrecken. Auf diesen Führungsstangen (10̸, 11) ist eine Halteeinrichtung (12) als ganzes verschieblich in den Richtungen des Doppelpfeils A gelagert. Die Halteeinrichtung (12) besteht aus zwei übereinander angeordneten Klemmleisten (13, 14), von denen die obere Klemmleiste (13) mittels hier nicht näher dargestellter Pneumatikylinder gegenüber der unteren Klemmleiste (14) anhebbar oder zwecks Festklemmen einer Kunststoffplatte in Richtung auf die untere Klemmleiste (14) absenkbar ist. Die untere Klemmleiste (14) ist mit einem kolbenstangenlosen Positionierzylinder (15) verbunden, der parallel und mittig zu den Führungsstangen (10̸, 11) angeordnet ist und auf einer sich zwischen den vorderen Rahmenabschnitt (3) und dem rückwärtigen Rahmenabschnitt (6) erstreckenden Stützstrebe (16) angeordnet ist. Der Positionierzylinder (15) wird mittels Druckluft betrieben. Mit der Verschiebung der unteren Klemmleiste (14) wird auch die obere Klemmleiste (13) mitgenommen, d. h. sie behält insoweit ihre Stellung relativ zur unteren Klemmleiste (14) bei.

Mit der unteren Klemmleiste (14) der Halteeinrichtung (12) verbunden ist eine Heizeinrichtung (17). Sie weist zwei sich parallel zu den Klemmleisten (13, 14) erstreckende Heizschwerter (18, 19) auf, die im Abstand zueinander übereinander liegen und an seitlichen Führungsstangen (20̸, 21) vertikal verfahrbar geführt sind. Hierfür sind nicht näher dargestellte Pneumatikzylinder vorgesehen. Auf diese Weise können die Heizschwerter (18, 19) von oben bzw. von unten an eine in der Halteeinrichtung (12) zwischen den Klemmleisten (13, 14) eingeklemmte Kunststoffplatte herangefahren werden. Die Heizschwerter (18, 19) sind mittels elektrischer Energie erhitzbar.

Wie sich insbesondere aus Figur (3) ergibt, sind die Führungsstangen (20̸, 21) untenseitig an einer horizontalen Traverse (22) befestigt, welche über einen vertikalen Träger (23) und einen horizontalen Träger (24) mit der Unterseite der unteren Klemmleiste (14) verbunden ist. Beim Verfahren der Halteeinrichtung (12) wird also die Heizeinrichtung (17) mitgenommen, d. h. die Position der Heizschwerter (18, 19) in Bezug auf die Klemmleisten (13, 14) bleibt - abgesehen von ihren Höhenpositionen - gleich.

Auf dem vorderen Rahmenabschnitt (3) ist eine Klemmeinrichtung (25) angeordnet. Die Klemmeinrichtung (25) ist im wesentlichen gleich aufgebaut wie die Halteeinrichtung (12), weist also eine obere Klemmleiste (26) und eine untere Klemmleiste (27) auf. Die untere Klemmleiste (27) ist ortsfest angeordnet. Ihre Oberseite liegt auf der gleichen Höhe wie die Oberseite der unteren Klemmleiste (14) der Halteeinrichtung (12). Die obere Klemmleiste (26) der Klemmeinrichtung (25) ist mittels hier nicht näher dargestellten Pneumatikzylindern vertikal verfahrbar. In Offenstellung kann eine Kunststoffplatte zwischen die Klemmleisten (26, 27) geschoben und durch Absenken der oberen Klemmleiste (26) festgeklemmt werden.

Vor der Klemmeinrichtung (25), und zwar vor der unteren Klemmleiste (27), ist eine Biegewange (28) angeordnet. Sie erstreckt sich im wesentlichen über die Breite des Maschinenrahmens (2) und ist in Schwenklagern (29, 30̸) um eine horizontale Achse aus der in Figur (3) gezeigten, horizontalen Stellung in eine vertikale Stellung verschwenkbar. Hierzu dient ein Elektromotor (31), dessen Drehmoment über ein Winkelgetriebe (32) auf die Biegewange (28) übertragen wird. In horizontaler Stellung fluchtet die Oberseite der Biegewange (28) mit den Oberseiten der unteren Klemmleisten (14) bzw. (27) der Halteeinrichtung (12) bzw. der Klemmeinrichtung (25). An der Biegewange (28) ist zusätzlich ein Stützgestell (33) angebracht, das den umzubiegenden Teil der Kunststoffplatte zusätzlich abstützt.

Wie aus Figur (1) zu ersehen ist, ist neben dem Positionierzylinder (15) und parallel dazu ein weiterer Druckzylinder (34) angeordnet, dessen kolbenstangenloser Kolben über ein an der Oberfläche verlaufendes Stahlband mit der Halteeinrichtung (12) bzw. deren unterer Klemmleiste (14) verbunden ist. Der Druckzylinder (34) ist in Längsrichtung um einen Totweg (35) verschieblich auf einer Stützstrebe (36) gelagert, die sich zwischen dem vorderen und rückwärtigen Rahmenabschnitt (3, 6) erstreckt. Der Druckzylinder (34) hat eine pneumatische Verbindung zu einer Stützeinrichtung (37), die am vorderen Ende des seitlichen Rahmenabschnittes (5) und damit im Bereich der Stirnseite der Biegewange (28) und der Klemmeinrichtung (25) senkrecht stehend angeordnet ist. Die Stützeinrichtung weist eine Vertikalführung (38) mit einem darauf vertikal verfahrbaren Führungswagen (39) auf, an dem eine horizontal sich oberhalb der Klemmeinrichtung (25) erstreckender Stützstab (40̸) angebracht ist. Neben der Vertikalführung (38) erstreckt sich ein vertikal stehender Druckzylinder (41), der ebenfalls kolbenstangenlos ausgebildet ist und mit dessen Kolben der Führungswagen (39) verbunden ist. Der Druckzylinder (41) ist mit dem Druckzyliner (34) identisch, d. h. er hat insbesondere den gleichen Kolbendurchmesser. Über den Druckzylinder (41) kann der Stützstab (40̸) in seiner Höhe verfahren werden.

Im vorliegenden Ausführungsbeispiel erstreckt sich der Stützstab (40̸) nur bis etwa zur Mitte der Biegemaschine (1). Für sehr breite Werkstücke besteht die Möglichkeit, den Stützstab (40̸) über das freie Ende hinaus bis zur gegenüberliegenden Seite der Biegemaschine (1) zu verlängern und dort ebenfalls mit einer Stützeinrichtung zu verbinden, die synchron mit der Stützeinrichtung (37) arbeitet. Damit das Werkstück bei geschlossener Ausbildung entnommen werden kann, mußte dann der Stützstab mindestens an einem Ende lösbar sein.

In Figur (4) ist die pneumatische Verbindung zwischen den beiden Druckzylindern (34, 41) näher dargestellt. Beide Druckzylinder weise kolbenstangenlose Kolben (42, 43) auf, wobei der Kolben (42) des Druckzylinders (34) mit der Halteeinrichtung (12) und der Kolben (43) des Druckzylinders (41) mit dem Führungswagen (39) verbunden sind. Sie schließen Druckräume (44, 45) ein, welche über eine Pneumatikleitung (46) miteinander verbunden sind. In diese Pneumatikleitung (46) ist ein Steuerventil (47) eingebaut, das über einen Magneten (48) gegen die Wirkung einer Zugfeder (49) steuerbar ist. Von der Pneumatikleitung (46) geht zwischen dem Steuerventil (47) und dem Druckzylinder (34) eine Zweigleitung (50̸) ab, die in einem Steuerventil (51) endet, welches ebenfalls durch einen Magneten (52) gegen die Wirkung einer Zugfeder (53) betätigbar ist. Eine weitere Zweigleitung geht zwischen dem Steuerventil (47) und der Zweigleitung (50̸) von der Pneumatikleitung (46) ab und hat Verbindung zu einer Pneumatikdruckquelle mit ca. 2,5 bar Druck. An diese Zweigleitung (54) ist gleichfalls ein Steuerventil (55) angeordnet, das über einen Magneten (56) gegen die Wirkung einer Zugfeder (57) betätigbar ist. Im dargestellten Fall befinden sich das Steuerventil (47) in Offenstellung, das Steuerventil (51) in Belüftungsstellung und das Steuerventil (55) in Sperrstellung.

Mit der gezeigten Biegemaschine (1) gestaltet sich ein Biegevorgang wie folgt.

Zunächst wird die Halteeinrichtung (12) vom Bedienungspult (9) her in die in den Figuren (1) bis (3) gezeigte vordere Endstellung gebracht, um für die Steuereinrichtung eine Null-Lage zu definieren. Die Klemmleisten (13, 14) der Halteeinrichtung (12) und die Klemmleisten (26, 27) der Klemmeinrichtung (25) werden in Offenstellung angehoben. Ferner wird die Biegewange (28) gegenüber der in Figur (3) dargestellten Stellung um 90̸° nach oben verschwenkt, um einen Anschlag zu bilden. Die pneumatische Schaltung entspricht der in Figur (4) gezeigten Stellung, das heißt die Druckräume (44, 45) sind über das Steuerventil (51) belüftet, so daß sich der Stützstab (40̸) in seiner untersten Endstellung knapp oberhalb der Klemmeinrichtung (25) befindet.

Es kann dann eine Kunststoffplatte von hinten zwischen zunächst die Klemmleisten (13, 14) der Halteeinrichtung (12) und dann weiter nach vorn zwischen die Klemmleisten (26, 27) der Klemmeinrichtung (25) eingeschoben werden, bis sie mir ihrer Vorderkante an der Biegewange (28) zur Anlage kommt. In die Steuereinrichtung wird nun der Abstand eingegeben, in dem die Biegelinie zur an der Biegewange (28) anliegenden freien Kante der Kunststoffplatte zu liegen kommen soll. Der weitere Ablauf wird dann entweder von Hand, also halbautomatisch, oder durch entsprechende Programmierung der Steuereinrichtung vollautomatisch gesteuert.

Zunächst wird die Klemmeinrichtung (25) durch Absenkung der oberen Klemmleiste (26) geschlossen und damit die Kunststoffplatte in ihrer Stellung fixiert. Anschließend wird die Halteeinrichtung (12) in geöffnetem Zustand durch entsprechende Ansteuerung des Positionierzylinders (15) nach hinten, also von der Klemmeinrichtung (25) weg verfahren, und zwar um einen solchen Betrag, daß die Heizschwerter (18, 19) nach dem Anhalten der Halteeinrichtung (12) oberhalb der vorgesehenen Biegelinie zu stehen kommen. Dabei wird der Druckzylinder (34) zunächst um den Totweg (35) nach hinten verschoben, bis er durch einen Anschlag am hintenseitigen Ende des Totweges (35) angehalten wird. Erst dann wird der Kolben (42) in den Druckzylinder (34) nach hinten - das heißt in Figur (4) nach rechts - verschoben.

Die Kunststoffplatte wird anschließend durch Absenken der oberen Klemmleiste (13) in der Halteeinrichtung (12) festgeklemmt. Gleichzeitig werden die beiden Heizschwerter (18, 19) einander angenähert, bis sie an der Oberseite bzw. der Unterseite der Kunststoffplatte zur Anlage gekommen sind. Sie erhitzen dann den Kunststoff im Bereich der vorgesehenen Biegelinie so stark, daß er plazifiziert und biegsam wird. Wenn die Biegelinie genügend stark erhitzt ist, wird die Klemmeinrichtung (25) durch Hochfahren der oberen Klemmleiste (26) geöffnet. Gleichzeitig wird das Steuerventil (51) durch entsprechende Ansteuerung des Magneten (52) in Sperrstellung gebracht und das Steuerventil (55) - ebenfalls durch entsprechende Ansteuerung des Magneten (56) - in Offenstellung für etwa eine Sekunde umgeschaltet, um dann wieder in Sperrstellung verfahren zu werden. Auf diese Weise werden die Pneumatikleitung (46) und die Druckräume (44, 45) mit ca. 2,5 bar vorgespannt.

Danach wird die Halteeinrichtung (12) durch entsprechende Ansteuerung des Positionierzylinders (15) wieder in Richtung auf die Biegewange (28) verfahren. Gleichzeitig werden die Heizschwerter (18, 19) von der Kunststoffplatte gelöst und so weit nach oben bzw. nach unten verfahren, daß sie beim weiteren Vorfahren der Halteeinrichtung (12) nicht mit der Klemmeinrichtung (25) bzw. der Biegewange (28) kollidieren können. Der horizontale Abstand zwischen den Heizschwertern (18, 19) und den Klemmleisten (13, 14) der Halteeinrichtung (12) ist so bemessen, daß die erhitzte Biegelinie bei Erreichen der vorderen Endstellung der Halteeinrichtung (12) etwa oberhalb der Hinterkante der Biegewange (28) zu liegen kommt.

Zu Beginn der Transportbewegung der Halteeinrichtung (12) wird zunächst der komplette Druckzylinder (34) mitgenommen, und zwar um den Totweg (35). Während dieser Zeit erfolgt in dem Druckzylinder (34) noch keine Volumenverdrängung, denn der Kolben (43) im Druckzylinder (41) wird nicht verfahren. Der Totweg (35) entspricht dabei im wesentlichen dem Abstand des Stützstabes (40̸) zur Transportebene, also zur Ebene der Kunststoffplatte, in der unteren Endstellung des Stützstabes (40̸). Auf diese Weise wird verhindert, daß der Stützstab (40̸) einen um diesen Abstand vergrößerte und damit nicht passende Stützstellung einnimmt. Das gleiche Ergebnis könnte bei ortsfester Anordnung des Druckzylinders (34) durch entsprechend verspätetes Umschalten des Steuerventils (51) aus der Belüftungs- in die Sperrstellung erreicht werden.

Nachdem der Druckzylinder (34) an einem vorderen Anschlag angehalten wird, bewirkt die weitere Bewegung der Halteeinrichtung (12) ein Verschieben des Kolbens (42) im Druckzylinder (34). Hierdurch wird das Volumen im Druckraum (44) verkleinert, was zu einer entsprechenden Verdrängungsbewegung im und Vergrößerung des Druckraums (45) des Druckzylinders (41) führt. Entsprechend dem zurückgelegten Transportweg wird also der Stützstab (40̸) angehoben und erreicht in der vorderen Endstellung der Halteeinrichtung (12) seine Stützstellung. In dieser Stellung ist sein Abstand zur Transportebene bzw. zur Kunststoffplatte in etwa so groß wie der Abstand zwischen der Vorderkante der Kunststoffplatte und der ersten Biegelinie.

Anschließend wird die Klemmeinrichtung (25) durch Absenken der oberen Klemmleiste (26) zugefahren und damit die Kunststoffplatte festgeklemmt. Gleichzeitig wird das Steuerventil (47) in Sperrstellung gebracht und dadurch die Stützposition des Stützstabes (40̸) fixiert. Der Elektromotor (31) wird in der Weise angesteuert, daß die Biegewange (28) zusammen mit dem Stützgestell (33) hochgeschwenkt wird. Hierdurch wird der auf der Biegewange (28) aufgeschobene Teil der Kunststoffplatte um 90̸° hochgebogen.

Unmittelbar nach Festklemmen der Kunststoffplatte in der Klemmeinrichtung (25), also noch während des Biegevorgangs, wird die Verklemmung der Kunststoffplatte in der Halteeinrichtung (12) durch Hochfahren der oberen Klemmleiste (13) gelöst. Gleichzeitig wird das Steuerventil (51) wieder in die gezeigte Belüftungsstellung gebracht. Die Halteeinrichtung (12) wird dann mittels des Positionierzylinders (15) nach hinten verfahren, bis die Heizschwerter (18, 19) wieder mit der nächsten vorgesehenen Biegelinie fluchten. Dabei wird der Kolben (42) in dem Druckzylinder (34) nach Überwindung des Totweges (35) zurückgefahren. Die Sperrstellung des Steuerventils (47) verhindert ein vorzeitiges Absenken des Stützstabes (40̸).

Der Abstand der zweiten zur ersten Biegelinie kann durch entsprechende Eingabe in die Steuereinrichtung festgelegt werden, das heißt der Abstand kann derselbe sein wie beim ersten Biegevorgang, es kann jedoch auch ein andere Abstand vorgegeben werden. Nach Anhalten der Halteeinrichtung (12) wird die Kunststoffplatte durch Absenken der oberen Klemmleiste (13) festgeklemmt und werden die Heizschwerter (18, 19) von oben bzw. von unten an die Oberflächen der Kunststoffplatte zur Anlage gebracht. Gleichzeitig verhindert der Stützstab (40̸) ein Einfallen des hochgebogenen Teils der Kunststoffplatte in die Maschine. Die Ausbildung der weiteren Biegelinie erfolgt somit während des Biegens und des Aushärtens an der vorangegangen Biegelinie. Das Biegen und das Aushärten bilden den Biegevorgang insgesamt.

Nach dem Aushärten der ersten Biegelinie wird das Steuerventil (47) wieder in Offenstellung gebracht, wobei das Steuerventil (51) in Belüftungsstellung verbleibt. Dies hat zur Folge, daß sich der Stützstab (40̸) aufgrund seines Eigengewichts in die untere Endstellung absenkt. Ist die neue Biegelinie hinreichend erhitzt, wiederholt sich der vorbeschriebene Ablauf, d.h. zunächst werden das Steuerventil (51) in Sperrstellung und das Steuerventil (45) kurzzeitig in Offenstellung gebracht. Dann wird die Halteeinrichtung (12) unter Verklemmung der Kunststoffplatte verschlossen und nach öffnen der Klemmeinrichtung (25) in Richtung auf die Biegewange (28) verfahren, wobei die Heizschwerter (18, 19) von der Kunststoffplatte wegbewegt werden. Aufgrund der Verdrängungswirkung des Kolbens (42) in dem Druckzylinder (34) wird der Stützstab (40̸) wieder angehoben, und zwar um einen Betrag, der dem Abstand zwischen zwei Biegelinien, vermindert um den Totweg (35), entspricht. Nach Erreichen der vorderen Endstellung der Halteeinrichtung (12) schließt sich ein weiterer Biegevorgang in der vorbeschriebenen Weise an. Nach dem Umbiegen um 90̸° kommt der erste umgebogene Abschnitt der Kunststoffplatte horizontal oberhalb des Stützstabes (40̸) zu liegen und kann sich auf diesem abstützen. Ohne diesen Stützstab (40̸) wäre die Neigung des gesamten umgebogenen Teils wegen der Schwerpunktverschiebung in Richtung zur Maschinenmitte hin sehr groß, in die Biegemaschine (1) hineinzufallen.

Auf diese Weise kann - wenn gewünscht - ein geschlossener Hohlkörper gebildet werden, dessen einzige offene Stelle ein Schlitz ist, der anschließend von einer entsprechenden Schweißeinrichtung geschlossen werden kann. Es besteht auch die Möglichkeit, statt rechteckiger Hohlkörper auch andere Hohlkörper, beispielsweise sechseckige, auszubilden. In diesem Fall muß eine entsprechende Korrektur vorgenommen werden, damit der Stützstab (40̸) nicht eine zu hohe Stützstellung einnimmt. Dies kann beispielsweise durch Vergrößerung des Totweges (35) geschehen, wozu er vorzugsweise einstellbar sein sollte, oder durch ein entsprechend verspätetes Schließen des Steuerventils (51) beim Vorfahren der Halteeinrichtung berücksichtig werden. Es versteht sich, daß dies durch einen Rechner vollautomatisch in Abhängigkeit von Biegewinkel, den die Biegewange (28) beschreibt, geschehen kann.

## Patentansprüche

1. Biegemaschine (1) zum mehrfachen, aufeinanderfolgenden Umbiegen von insbesondere plattenförmigen Werkstücken,
a) mit einer Biegeeinrichtung (28) zum Umbiegen eines in die Biegeeinrichtung hineintransportierten Teil des Werkstückes um eine vorgesehene Biegelinie,
b) mit einer Transporteinrichtung (12) zum Einschieben bzw. Nachschieben des Werkstückes in die Biegeeinrichtung vor dem ersten Biegevorgang bzw. zwischen zwei Biegevorgängen um einen Transportweg, der dem Abstand zwischen Vorderkante des Werkstückes und der ersten Biegelinie bzw. zwischen zwei Biegelinien entspricht,
gekennzeichnet durch folgende Merkmale:
c) der Biegeeinrichtung (28) ist eine Stützeinrichtung (37) zur Abstützung des umgebogenen Teils des Werkstückes zugeordnet,
d) die Stützeinrichtung (37) weist ein quer zur Transportebene des Werkstückes verfahrbares Stützelement (40̸) auf;
e) für das Verfahren des Stützelements (40̸) ist ein Verfahrantrieb (41) vorgesehen;
f) der Transporteinrichtung (12) ist ein Wegaufnehmer (34) zur wenigstens teilweisen Erfassung des vom Werkstück beim Transportvorgang in die Biegeeinrichtung (28) zurückgelegten Weges zugeordnet;
g) zwischen Verfahrantrieb (41) und Wegaufnehmer (34) ist eine Übertragungseinrichtung (46) mit einer Steuereinrichtung zur Übertragung des vom Wegaufnehmer (34) erfaßten Weges auf den Verfahrantrieb (41) in der Weise vorgesehen, daß das Stützelement (40̸) nach wenigstens dem zweiten Transportvorgang des Werkstückes eine Stützstellung für den umgebogenen Teil des Werkstückes einnimmt.

2. Biegemaschine nach Anspruch (1)
dadurch gekennzeichnet, daß der Wegaufnehmer ein elektrischer Wegsensor und der Verfahrantrieb ein Elektromotor sind und daß die Übertragungseinrichtung eine elektrische oder elektronische Steuerschaltung zur Umsetzung der vom Wegsensor abgegebenen Signale in eine entsprechende Verfahrbewegung des Stützelements aufweist.

3. Biegemaschine nach Anspruch (2)
dadurch gekennzeichnet, daß die Steuerschaltung so ausgebildet ist, daß das Stützelement zwischen zwei Biegevorgängen in seine der Transportebene benachbarten Endstellung verfahrbar ist und dann aus dieser Endstellung um einen Weg bewegbar ist, der dem jeweiligen Transportweg des Werkstückes, vermindert um den Abstand des Stützelements zwischen der vorerwähnten Endstellung und der Transportebene, entspricht.

4. Biegemaschine nach Anspruch (2),
dadurch gekennzeichnet, daß die Steuerschaltung Speicherelemente zur Speicherung zweier aufeinanderfolgender Transportvorgänge des Werkstückes hat und daß die Steuerschaltung eine Differenzbildung zwischen den beiden Transportwegen vornimmt und den Elektromotor nur jeweils zur Ausführung des Differenzweges ansteuert.

5. Biegemaschine nach Anspruch (1),
dadurch gekennzeichnet, daß der Wegaufnehmer als ein erster und die Verfahreinrichtung als ein zweiter Druckzylinder (34, 41) ausgebildet sind und die Druckräume (44, 45) beider Druckzylinder (34, 41) über eine Steuerventileinheit aufweisende Fluidleitungen (46) miteinander verbunden sind, wobei der erste Druckzylinder (34) mit der Transporteinrichtung (12) derart gekoppelt ist, daß jeweils mit einem Transportvorgang ein für das Verfahren des Stützelements (40̸) in die Stützstellung ausreichendes Volumen verdrängbar ist, und wobei die Steuerventileinheit zwischen zwei Biegevorgängen derart ansteuerbar ist, daß das Stützelement in seine der Transportebene benachbarten Endstellung bewegbar ist.

6. Biegemaschine nach Anspruch (5),
dadurch gekennzeichnet, daß der erste Druckzylinder (34) zwischen zwei Anschlägen um einen Totweg (35) verschieblich gelagert ist, der im wesentlichen dem Abstand des Stützelements (40̸) zur Transportebene in der zu dieser benachbarten Endstellung entspricht.

7. Biegemaschine nach Anspruch (5),
dadurch gekennzeichnet, daß die Steuerventileinheit ein Belüftungsventil (51) zur Belüftung der Fluidleitung (46) bei der Wegaufnahme im ersten Druckzylinder (34) aufweist, wobei das Belüftungsventil (51) so lange in Belüftungsstellung haltbar ist, daß der vom ersten Druckzylinder (34) aufgenommene Weg auf den zweiten Druckzylinder (41) um einen solchen Anteil vermindert übertragen wird, der dem Abstand des Stützelements (40̸) zur Transportebene in der zu dieser benachbarten Endstellung entspricht.

8. Biegemaschine nach einem der Ansprüche (5) bis (7),
dadurch gekennzeichnet, daß die Steuerventileinheit ein erstes und ein zweites Steuerventil (47, 51) aufweist, wobei das erste Steuerventil (47) in der Fluidleitung (46) liegt und zwischen einer Offenstellung und einer Sperrstellung schaltbar ist und wobei das zweite Steuerventil (51) in einem Abzweig (50̸) der Fluidleitung (46) zwischen erstem Steuerventil (47) und erstem Druckzylinder (34) angeordnet und zwischen einer Belüftungsstellung und einer Sperrstellung schaltbar ist, und daß die beiden Steuerventile (47, 51) von der Steuereinrichtung derart ansteuerbar sind, daß bei einer Transportbewegung der Transporteinrichtung (12) das erste Steuerventil (47) in Offenstellung und das zweite Steuerventil (51) in Sperrstellung ist, nach Beendigung der Transportbewegung das erste Steuerventil (47) in Sperrstellung und das zweite Steuerventil (51) in Belüftungsstellung ist und daß vor Beginn einer weiteren Transportbewegung das erste Steuerventil (47) so lange in Offenstellung unter Beibehaltung der Belüftungsstellung des zweiten Steuerventils (51) ist, bis das Stützelement (40̸) seine Endstellung benachbart der Transportebene einnimmt.

9. Biegemaschine nach einem der Ansprüche (5) bis (8),
dadurch gekennzeichnet, daß die Fluidleitung (46) über ein drittes Steuerventil (55) mit einer Druckluftquelle verbindbar ist, deren Druck gerade so groß ist, daß bei Beaufschlagung der Fluidleitung (46) mit diesem Druck der zweite Druckzylinder (41) noch keine Verfahrbewegung ausführt, und daß das dritte Steuerventil (55) für kurze Zeit in Offenstellung bringbar ist, wenn das erste Steuerventil (47) in Offenstellung und das zweite Steuerventil (51) in Sperrstellung ist.

10. Biegemaschine (1) zum mehrfachen, aufeinanderfolgenden Umbiegen von insbesondere plattenförmigen Werkstücken,
a) mit einer Biegeeinrichtung (28) zum Umbiegen eines in die Biegeeinrichtung hineintransportierten Teil des Werkstückes um eine vorgesehene Biegelinie,
b) mit einer Transporteinrichtung (12) zum Einschieben bzw. Nachschieben des Werkstückes in die Biegeeinrichtung vor dem ersten Biegevorgang bzw. zwischen zwei Biegevorgängen um einen Transportweg, der dem Abstand zwischen Vorderkante des Werkstückes und der ersten Biegelinie bzw. zwischen zwei Biegelinien entspricht,
gekennzeichnet durch folgende Merkmale:
c) der Biegeeinrichtung (28) ist eine Stützeinrichtung (37) zur Abstützung des umgebogenen Teils des Werkstilckes zugeordnet,
d) die Stützeinrichtung (37) weist ein quer zur Transportebene des Werkstückes verfahrbares Stützelement (40̸) auf;
e) für das Verfahren des Stützelements (40̸) ist ein Verfahrantrieb (41) vorgesehen;
f) es ist eine Steuereinrichtung vorgesehen, die die Verfahreinrichtung derart ansteuert, daß die Stützeinrichtung aus einer Ruhestellung erstmals mit Abschluß des zweiten Biegevorgangs in eine Stützstellung vorgefahren wird und daß die Stützeinrichtung für jeden weiteren Biegevorgang zunächst aus der Stützstellung wieder zurückgefahren und mit Abschluß des jeweiligen Biegevorgangs wieder in die Stützstellung vorgefahren wird.

11. Biegemaschine nach Anspruch 10̸,
dadurch gekennzeichnet, daß der Verfahrantrieb derart einstellbar ist, daß er in der Stützstellung durch Anlage am Werkstück angehalten wird.

## Claims

1. A bending machine (1) for the multiple, successive bending of workpieces, particularly in sheet form,
a) with a bending device (28) for the bending, about a scheduled bending line, of a part of the workpiece which is conveyed into the bending device,
b) with a transport device (12) for pushing or subsequently pushing the workpiece into the bending device before the first bending operation or between two bending operations by a transport distance which corresponds to the distance between the leading edge of the workpiece and the first bending line or between two bending lines,
characterised by the following features;
c) a support device (37) is associated with the bending device (28) for supporting the bent part of the workpiece,
d) the support device (37) comprises a support element (40) which can travel transversely to the transport plane of the workpiece;
e) a positioning drive (41) is provided for moving the support element (40);
f) a distance sensor (34) is associated with the transport device (12) for at least partially detecting the distance covered by the workpiece during the transport operation into the bending device (28);
g) a transmission device (46) with a controller for transmitting the distance determined by the distance sensor (34) to the positioning drive (41) is provided between the positioning drive (41) and the distance sensor (34), in such a manner that the support element (40) takes up a supporting position for the bent part of the workpiece after at least the second transport operation of the workpiece.

2. A bending machine according to claim 1, characterised in that the distance sensor is an electrical distance sensor and the positioning drive is an electric motor, and that the transmission device comprises an electrical or electronic control circuit for converting the signals emitted by the distance sensor into a corresponding positioning movement of the support element.

3. A bending machine according to claim 2, characterised in that the control circuit is designed so that the support element can travel into its end position adjacent to the transport plane between two bending operations and can then be moved from this end position by a distance which corresponds to the respective transport distance of the workpiece reduced by the distance of the support element between the aforementioned end position and the transport plane.

4. A bending machine according to claim 2, characterised in that the control circuit has memory elements for storing two successive transport operations of the workpiece, and that the control circuit effects a difference formation between the two transport distances and only actuates the electric motor in order to execute the differential distance in each case.

5. A bending machine according to claim 1, characterised in that the distance sensor is constructed as a first and the positioning device is constructed as a second pressure cylinder (34, 41), and the pressure spaces (44, 45) of both pressure cylinders (34, 41) are connected to each other via fluid lines (46) comprising a control valve unit, wherein the first pressure cylinder (34) is coupled to the transport device (12) in such a way that with each transport operation a volume can be displaced which is sufficient for moving the support element (40) into its supporting position, and wherein the control valve unit can be actuated between two bending operations in such a way that the support element can be moved into its end position adjacent to the transport plane.

6. A bending machine according to claim 5, characterised in that the first pressure cylinder (34) is mounted so that it is displaceable between two stops by an idle distance (35) which substantially corresponds to the distance of the support element (40) from the transport plane in its end position adjacent to the latter.

7. A bending machine according to claim 5, characterised in that the control valve unit comprises a ventilation valve (51) for ventilating the fluid line (46) during the recording of the displacement in the first pressure cylinder (34), wherein the ventilation valve (51) can be held in the ventilation position until the displacement recorded by the first pressure cylinder (34) is transmitted to the second pressure cylinder (35) reduced by a proportion which corresponds to the distance of the support element from the transport plane in the end position adjacent to the latter.

8. A bending machine according to any one of claims 5 to 7, characterised in that the control valve unit comprises a first and a second control valve (47, 51), wherein the first control valve (47) is situated in the fluid line (46) and can be switched between an open position and a closed position, and wherein the second control valve (51) is disposed in a branch (50) of the fluid line (46) between the first control valve (47) and the first pressure cylinder (34) and can be switched between a ventilation position and a closed position, and that the two control valves (47, 51) can be actuated by the controller in such a way that during a transport movement of the transport device (12) the first control valve (47) is in the open position and the second control valve (51) is in the closed position, after the completion of the transport movement the first control valve (47) is in the closed position and the second control valve (51) is in the ventilation position, and that before the start of a further transport movement the first control valve (47) is held in the open position, with the ventilation position of the second control valve (51) being maintained, until the support element (40) takes up its end position adjacent to the transport plane.

9. A bending machine according to any one of claims 5 to 8, characterised in that the fluid line (46) can be connected via a third control valve (55) to a compressed air source, the pressure of which is just high enough so that when this pressure acts on the fluid line (46) the second pressure cylinder (41) still does not execute a positioning movement, and that the third control valve (55) can be brought into its open position for a short time when the first control valve (47) is in the open position and the second control valve (51) is in the closed position.

10. A bending machine (1) for the multiple, successive bending of workpieces, particularly in sheet form,
a) with a bending device (28) for the bending, about a scheduled bending line, of a part of the workpiece which is conveyed into the bending device,
b) with a transport device (12) for pushing or subsequently pushing the workpiece into the bending device before the first bending operation or between two bending operations by a transport distance which corresponds to the distance between the leading edge of the workpiece and the first bending line or between two bending lines,
characterised by the following features;
c) a support device (37) is associated with the bending device (28) for supporting the bent part of the workpiece,
d) the support device (37) comprises a support element (40) which can travel transversely to the transport plane of the workpiece;
e) a positioning drive (41) is provided for moving the support element (40);
f) a controller is provided which actuates the positioning device in such a way that the support device is advanced from an inoperative position into a supporting position for the first time with the end of the second bending operation, and that for each further bending operation the support device is first moved back again from the supporting position and is advanced into the supporting position again with the conclusion of the respective bending operation.

11. A bending machine according to claim 10, characterised in that the positioning drive can be adjusted in such a way that it is stopped in the supporting position by contact with the workpiece.

## Revendications

1. Machine à plier (1) pour plier plusieurs fois et successivement des pièces à usiner notamment en forme de plaque, comprenant
a) un dispositif de pliage (28) pour plier une partie de la pièce à usiner introduite dans le dispositif de pliage selon une ligne de pliage prévue à cet effet,
b) un dispositif de transport (12) pour introduire ou faire avancer la pièce à usiner dans le dispositif de pliage avant la première opération de pliage ou entre deux opérations de pliage sur une distance correspondant à l'écart entre l'arête avant de la pièce à usiner et la première ligne de pliage ou à l'écart entre deux lignes de pliage,
caractérisée par les caractéristiques suivantes :
c) un dispositif de soutien (37) destiné à soutenir la partie pliée de la pièce à usiner est associé au dispositif de pliage (28),
d) le dispositif de soutien (37) présente un élément de soutien (40) pouvant être déplacé transversalement au plan de transport de la pièce à usiner;
e) une commande de déplacement (41) est prévue pour déplacer l'élément de soutien (40);
f) un capteur de déplacement (34) pour enregistrer au moins partiellement le trajet parcouru par la pièce à usiner lors de l'opération de transport dans le dispositif de pliage (28) est associé au dispositif de transport (12);
g) entre la commande de déplacement (41) et le capteur de déplacement (34) est prévu un dispositif de transmission (46) comportant un dispositif de commande pour transmettre le déplacement enregistré par le capteur de déplacement (34) à la commande de déplacement (41) de manière à ce que l'élément de soutien (40) se mette dans une position dans laquelle il soit apte à soutenir la partie pliée de la pièce à usiner après au moins la deuxième opération de transport de la pièce à usiner.

2. Machine à plier selon la revendication 1, caractérisée en ce que le capteur de déplacement est un détecteur de déplacement et la commande de déplacement un moteur électrique, et en ce que le dispositif de transmission est un circuit de commande électrique ou électronique pour convertir les signaux émis par le détecteur de déplacement en un déplacement correspondant de l'élément de soutien.

3. Machine à plier selon la revendication 2, caractérisée en ce que le circuit de commande est réalisé de telle manière que l'élément de soutien puisse être déplacé dans sa position finale adjacente au plan de transport entre deux opérations de pliage, puis être déplacé à partir de cette position finale sur une distance correspondant chaque fois au trajet parcouru par la pièce à usiner moins la distance entre la position finale de l'élément de soutien évoquée précédemment et le plan de transport.

4. Machine à plier selon la revendication 2, caractérisée en ce que le circuit de commande comporte des éléments de mémoire pour mémoriser deux opérations de transport successives de la pièce à usiner et en ce que le circuit de commande procède à la soustraction des deux trajets et n'actionne le moteur électrique que pour compenser la différence de déplacement.

5. Machine à plier selon la revendication 1, caractérisée en ce que le capteur de déplacement est réalisé en tant que premier vérin pneumatique et le dispositif de déplacement en tant que second vérin pneumatique (34, 41) et les espaces de compression (44, 45) des deux vérins pneumatiques (34, 41) sont reliés entre eux par le biais de conduites pneumatiques (46) présentant une unité de soupapes de commande, sachant que le premier vérin pneumatique (34) est couplé au dispositif de transport (12) de telle manière qu'un volume suffisant à déplacer l'élément de soutien (40) puisse chaque fois être déplacé lors d'une opération de transport, et sachant que l'unité de soupapes de commande peut être actionnée entre deux opérations de pliage de telle manière que l'élément de soutien puisse être déplacé dans sa position finale adjacente au plan de transport.

6. Machine à plier selon la revendication 5, caractérisée en ce que le premier vérin pneumatique (34) est monté entre deux butées de façon à pouvoir se déplacer d'un trajet mort (35) correspondant essentiellement à l'écart entre l'élément de soutien (40) et le plan de transport lorsque l'élément de soutien est dans la position finale adjacente au plan de transport.

7. Machine à plier selon la revendication 5, caractérisée en ce que l'unité de soupapes de commande présente une soupape de ventilation (51) pour ventiler la conduite pneumatique (46) lors de l'enregistrement dans le vérin pneumatique (34) du trajet parcouru, sachant que la soupape de ventilation (51) peut être maintenue en position de ventilation assez longtemps pour transmettre au second vérin pneumatique (41) le trajet enregistré par le premier vérin pneumatique (34) après en avoir retranché une somme correspondant à l'écart entre l'élément de soutien (40) et le plan de transport lorsque l'élément de soutien est dans la position finale adjacente au plan de transport.

8. Machine à plier selon l'une des revendications 5 à 7, caractérisée en ce que l'unité de soupapes de commande présente une première et une deuxième soupape de commande (47, 51), sachant que la première soupape de commande (47) se trouve dans la conduite pneumatique (46) et peut être commutée entre une position ouverte et une position fermée, et sachant que la deuxième soupape de commande (51) est disposée dans une dérivation (50) de la conduite pneumatique (46) entre la première soupape de commande (47) et le premier vérin pneumatique (34) et peut être commutée entre une position de ventilation et une position fermée, et en ce que les deux soupapes de commande (47, 51) peuvent être actionnées de telle manière par le dispositif de commande que lors d'un déplacement du dispositif de transport (12), la première soupape de commande (47) soit en position ouverte et la deuxième soupape de commande (51) en position fermée, qu'une fois le déplacement terminé, la première soupape de commande (47) soit en position fermée et la deuxième soupape de commande (51) en position de ventilation et qu'avant le début d'un autre déplacement, la première soupape de commande (47) reste en position ouverte tandis que la deuxième soupape de commande (51) conserve la position de ventilation, jusqu'à ce que l'élément de soutien (40) soit dans sa position finale dans laquelle il est adjacent au plan de transport.

9. Machine à plier selon l'une des revendications 5 à 8, caractérisée en ce que la conduite pneumatique (46) peut être reliée par le biais d'une troisième soupape de commande (55) à une source d'air comprimé dont la pression est juste suffisante pour que le second vérin pneumatique (41) n'effectue pas encore de déplacement lorsque la conduite pneumatique (46) est sollicitée par cette pression, et en ce que la troisième soupape de commande (55) peut être mise un court moment en position ouverte lorsque la première soupape de commande (47) est en position ouverte et la deuxième soupape de commande (51) en position fermée.

10. Machine à plier (1) pour plier plusieurs fois et successivement des pièces à usiner notamment en forme de plaque, comprenant :
a) un dispositif de pliage (28) pour plier une partie de la pièce à usiner introduite dans le dispositif de pliage selon une ligne de pliage prévue à cet effet,
b) un dispositif de transport (12) pour introduire ou faire avancer la pièce à usiner dans le dispositif de pliage avant la première opération de pliage ou entre deux opérations de pliage sur une distance correspondant à l'écart entre l'arête avant de la pièce à usiner et la première ligne de pliage ou à l'écart entre deux lignes de pliage,
caractérisée par les caractéristiques suivantes :
c) un dispositif de soutien (37) destiné à soutenir la partie pliée de la pièce à usiner est associé au dispositif de pliage (28),
d) le dispositif de soutien (37) présente un élément de soutien (40) pouvant être déplacé transversalement au plan de transport de la pièce à usiner;
e) une commande de déplacement (41) est prévue pour déplacer l'élément de soutien (40);
f) il est prévu un dispositif de commande qui commande le dispositif de déplacement de telle manière que le dispositif de soutien quitte une première fois une position de repos à la fin de la deuxième opération de pliage pour avancer dans une position de soutien et que, pour chaque opération de pliage suivante, le dispositif de soutien quitte dans un premier temps la position de soutien avant d'avancer à nouveau en position de soutien dès que l'opération de pliage est terminée.

11. Machine à plier selon la revendication 10, caractérisée en ce que la commande de déplacement est réglable de telle manière qu'en position de soutien, elle s'arrête en touchant la pièce à usiner.
